# EUROPÄISCHE PATENTSCHRIFT

(11) **EP 1 325 712 B1**
(45) Veröffentlichungstag und Bekanntmachung des Hinweises auf die Patenterteilung: **05.12.2007**
(21) Anmeldenummer: 02028806.4
(22) Anmeldetag: 23.12.2002
(51) Int. Cl.: A61C 1/00, A61C 1/08

(54) **Medizinisches oder dentalmedizinisches Behandlungsinstrument**
Medical or dental treatment instrument
Instrument de traitement médical ou dentaire

(30) Priorität: 02.01.2002 DE 10200055
(43) Veröffentlichungstag der Anmeldung: 09.07.2003
(73) Patentinhaber: Kaltenbach & Voigt GmbH, 88400 Biberach / Riss (DE)
(72) Erfinder: Reich, Heinrich, 88454 Hochdorf (DE); Thormeier, Karin, 88400 Biberach (DE)
(74) Vertreter: Schmidt-Evers, Jürgen

(56) Entgegenhaltungen:
- EP-A- 1 025 809
- WO-A-99/48435
- WO-A-99/60944
- DE-A- 10 017 964
- US-A- 5 944 522
- US-A- 5 961 326

## Beschreibung

Die Erfindung betrifft ein medizinisches oder dentalmedizinisches Behandlungsinstrument nach dem Oberbegriff des Anspruchs 1.

Bei einem medizinischen oder dentalmedizinischen Behandlungsinstrument handelt es sich um einen Gegenstand, der zur Bearbeitung des menschlichen oder tierischen Körpers bzw. Teilen davon mit einem durch einen Antrieb bewegbaren Werkzeug eingesetzt wird, wobei es sich bei den zu bearbeitenden Teilen auch um Prothesen handeln kann. Um einen erhöhten Verschleiß zugehöriger Antriebs- und Lagerteile und Funktionsstörungen zu vermeiden, ist es in bestimmten Zeitabständen erforderlich, diese Teile mit einem z.B. ölhaltigen Pflegemittel zu pflegen bzw. zu schmieren. In den meisten Fällen wird hierzu ein Pflegespray verwendet, der von hinten durch einen sogenannten Antriebskanal in das Behandlungsinstrument gesprüht wird.

Eine solche Pflegemaßnahme ist insbesondere nach einer Reinigung oder Desinfektion oder Sterilisation des Behandlungsinstruments, insbesondere des Handstücks, erforderlich, weil bei diesen Maßnahmen ein vorher eingebrachtes Pflegemittel weitgehend beseitigt wird und es ohne eine erneute Pflege zu einem erhöhtem Verschleiß der bewegten Antriebs und Lagerteile des Instruments kommt. Da es aus hygienischen Gründen erforderlich ist, das Behandlungsinstrument nach jedem Patienten im vorbeschriebenen Sinne zu reinigen, bedarf es danach auch der vorbeschriebenen Pflege.

Ein Behandlungsinstrument der eingangs angegebenen Art ist in der DE 44 08 574 A1 in einer sich abgewinkelt oder gerade erstreckenden Bauform beschrieben.

Es gibt für ein Behandlungsinstrument eine Benutzungsphase, eine Ruhephase und eine Wartungsphase.

In der Benutzungsphase ist das Behandlungsinstrument durch eine flexible Versorgungsleitung mit einem Versorgungsgerät verbunden. Das Versorgungsgerät weist eine elektronische Steuereinrichtung auf, von der sich die Versorgungsleitung erstreckt, die mit dem hinteren Ende des Behandlungsinstruments verbunden ist. Dem Behandlungsinstrument werden für seine Funktion Antriebsenergie, Kühlluft und Behandlungsmittel durch die Versorgungsleitung vom Versorgungsgerät zugeführt. In der Ruhephase wird das Behandlungsinstrument in einem Köcher bzw. Halter abgelegt, und zwar in einer nach oben, insbesondere schräg nach oben, ragenden Position, um es ergonomisch und griffgünstig anzuordnen.

In der Wartungsphase wird das Handstück von der Antriebseinheit abgenommen und gereinigt und/oder desinfiziert und/oder sterilisiert und gepflegt. Hierzu können verschiedene Reinigungsmittel, Desinfektionsmittel und ölhaltige Flüssigkeiten, z.B. als Spray, benutzt werden, die im folgenden allgemein mit dem Begriff "Flüssigkeit" bezeichnet werden.

Der Motor einer Antriebseinheit muß normalerweise gekühlt werden. Zur Kühlung der Antriebseinheit wird Kühlluft über den Versorgungsschlauch zugeführt. Des weiteren bewirkt die Kühlluft einen Überdruck im Wellenkanal und im Handstück, was das Eindringen von Verunreinigungen in das Innere des Handstücks oder der Anschlussund Antriebseinheit verhindert.

Insbesondere bei längeren Ruhephasen wandert ein Teil der in der Pflegephase zugeführten oder aufgenommenen Flüssigkeit entlang der Innenwand des Wellenkanals in die Antriebseinheit. Der in der Betriebsphase erzeugte Abrieb vermischt sich dabei mit der Flüssigkeit, wodurch die Gefahr besteht, daß es zu einer Verschmutzung sowie zur Leistungsminderung und zum Ausfall des Motors kommt.

Bei einem Handstück gemäß dem Oberbegriff des Anspruchs 1, wie es z.B. aus der WO 99/60944 A1 bekannt.

Der Erfindung liegt die Aufgabe zugrunde, ein axiales Rückströmen von Flüssigkeit an der Wand des Wellenkanals zu verhindern oder zumindest zu vermindern.

Diese Aufgabe wird durch die Merkmale des Anspruchs 1 gelöst. Vorteilhafte Weiterbildungen der Erfindung sind in den Unteransprüchen beschrieben.

Beim erfindungsgemäßen Behandlungsinstrument ist an bzw. in der Fläche des Wellenkanals mindestens eine Rückströmsperre zum Sperren der Rückströmung der Flüssigkeit angeordnet. Hierdurch wird letztere daran gehindert, insbesondere bei einer längeren Ruhephase zurückzuströmen und die vorbeschriebenen Nachteile herbei zu führen. Die Erfindung beruht auf der Erkenntnis, dass die Rückströmung durch ein Sammeln der Flüssigkeit in einem Speicherraum verhindert oder verhindert werden kann, dessen Volumen so groß ist, dass er wenigstens einen großen Teil der während einer Ruhephase zurückströmenden Flüssigkeit aufzunehmen vermag. Während der Behandlung eines Patienten in der Benutzungsphase, in der das Behandlungsinstrument hauptsächlich nach unten gerichtet ist, kann die Flüssigkeit aus dem Speicherraum wieder nach vorne strömen, wodurch der Speicherraum wenigstens teilweise entleert wird und für die nächste Ruhephase wieder aufnahmebereit ist. Es können mehrere Speicherräume axial nebeneinander liegend angeordnet sein.

Für eine wirksame Sperrung der Rückströmung reicht es aus, wenn die Rückströmsperre - insbesondere bezogen auf die Stellung des Behandlungsinstruments in seiner Ruhephase - im unteren Bereich des Wellenkanals angeordnet ist, in dem die Flüssigkeit sich auf Grund der Wirksamkeit der Schwerkraft sammelt, und in dem die Flüssigkeit deshalb hauptsächlich zurückströmt. Es ist jedoch vorteilhaft, die Rückströmsperre in einer den Wellenkanal umgebenden Ringform auszubilden. Hierdurch ist die Wirksamkeit der Rückströmsperre unabhängig von der jeweiligen Stellung des Behandlungsinstruments. Die Rückströmsperre ist in allen denkbaren um die Mittelachse verdrehten Stellungen des Behandlungsinstruments wirksam.

Das Rückströmen der Flüssigkeit lässt sich durch einen den Wellenkanal von hinten nach vorne durchströmenden Luftstrom verhindern oder wenigstens vermindern. Diese Maßnahme ist jedoch nur in der Betriebsphase des Behandlungsinstruments wirksam. Sie führt sie jedoch zu einer Verbesserung der Situation, weil der Rückströmung in der Betriebsphase wirksam entgegen gewirkt wird.

Die Luftströmung kann jedoch auch dazu ausgenutzt werden, den Speicherraum zu durchströmen und dadurch zu entleeren. Ein solches Behandlungsinstrument kann Betriebsphase auch in nach oben gerichteten Stellungen benutzt werden, da die Entleerung des Speicherraums und auch die Strömung der Flüssigkeit im Spalt des Wellenkanals durch die Luftströmung erzeugt wird. Im Rahmen der Erfindung kann die Luftströmung den Wellenkanalspalt längs durchströmen. Es ist jedoch auch vorteilhaft, die Luftströmung quer nach innen durch den Speicherraum zu leiten, wodurch dessen Entleerung intensiviert wird. Dies ist auch dann vorteilhaft, wenn stromabseitig von der Rückströmsperre Drehlagerelemente zum Lagern der Antriebswelle angeordnet sind. Diese Lagerteile können von der Luftströmung umgangen werden, so dass deren Wirksamkeit unbeeinträchtigt bleibt und somit groß ist.

Der Speicherraum kann durch eine Ausnehmung oder durch ein Material gebildet sein, das Flüssigkeit aufzunehmen vermag, z.B. ein poröses oder saugfähiges Material, Sintermetall oder ein Gewebe, dessen Fasern metallisch, mineralisch oder textil sein können.

Ein weiterer Vorteil der Erfindung besteht darin, dass die Flüssigkeit daran gehindert wird, im rückseitigen Endbereich des Wellenkanals durch vom Elektromotor stammenden Kohlenstaub verschmutzt zu werden, somit die Sauberkeit der Flüssigkeit aufrecht erhalten wird und diese sich deshalb für Pflege und Schmierung von Verschleißstellen besser eignet.

Nachfolgend werden vorteilhafte Ausgestaltungen der Erfindung benannt von Ausführungsbeispielen und Zeichnungen näher erläutert. Es zeigt
Fig. 1 ein Behandlungsinstrument in der Seitenansicht, das sich in der Ruhephase in einer Ablagevorrichtung befindet;
Fig. 2 den in Fig. 1 mit X gekennzeichneten Bereich des Behandlungsinstruments im vergrößerten Längsschnitt;
Fig. 3 das Behandlungsinstrument nach Fig. 2 im Betriebszustand;
Fig. 4 die in Fig. 3 mit Y gekennzeichnete Einzelheit in abgewandelter und vergrößerter Darstellung;
Fig. 5 die Einzelheit Y in weiter abgewandelter Ausgestaltung;
Fig. 6 die Einzelheit Y in weiter abgewandelter Ausgestaltung.

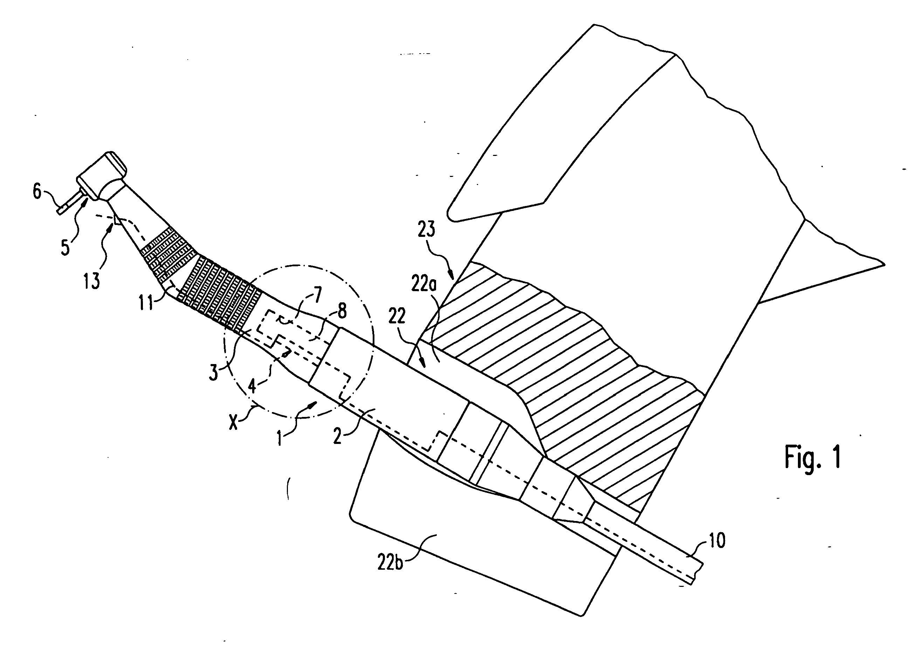

Das in Fig. 1 in seiner Gesamtheit mit 1 bezeichnete Behandlungsinstrument besteht vorzugsweise aus einem hinteren Instrumententeil, nämlich einer sogenannten Antriebseinheit 2 und einem vorderen Instrumententeil, nämlich einem sogenannten Handstück 3, die durch eine Kupplung 4, insbesondere eine Schraub- oder Steck- oder Steck/Dreh-Kupplung, lösbar miteinander verbunden sind. Beim vorliegenden Ausführungsbeispiel ist am vorderen Ende des Behandlungsinstruments 1 ein drehbar gelagerter Werkzeughalter 5 für ein Werkzeug 6 angeordnet, wobei das Werkzeug 6 seitlich oder nach vorne abstehen kann. Das Handstück 3 kann sich gerade oder seitlich gekrümmt oder winkelförmig erstrecken. Die Steck/Dreh-Kupplung wird durch eine im Querschnitt runde Kupplungsausnehmung 7 und einen darin mit geringem Bewegungsspiel einsteckbaren Kupplungszapfen 8 gebildet. Beim vorliegenden Ausführungsbeispiel ist die Kupplungsausnehmung 7 am hinteren Ende des Handstücks 3 angeordnet, und der im wesentlichen zylindrische Kupplungszapfen 8 erstreckt sich von der Antriebseinheit 2 nach vorne. Im gekuppelten Zustand sind die Kupplungsausnehmung 7 und der Kupplungszapfen 8 durch eine Verrastungsvorrichtung 9 lösbar miteinander verrastet. Diese weist ein Verrastungselement 9a auf, das in dem einen Kupplungsteil radial beweglich gelagert und durch eine Federkraft in eine die Teilungsfuge durchsetzende Verrastungsstellung vorgespannt ist, in der das Verrastungselement in eine Ringnut im anderen Kupplungsteil einfaßt. Eine solche Verrastungsvorrichtung 9a verrastet beim Kuppeln selbsttätig und ist zum Entkoppeln durch eine manuelle Zugkraftausübung überdrückbar, wobei das Verrastungselement selbsttätig in seine Freigabestellung verdrängt wird.

Die Antriebseinheit 2 ist mit einer flexiblen Versorgungsleitung 10 verbunden, die mit einem nicht dargestellten Steuergerät verbunden ist. Das Handstück 3 ist vorzugsweise auf dem Kupplungszapfen 8 frei drehbar gelagert, wodurch die Handhabbarkeit verbessert wird. Durch die Steck/Dreh-Kupplung erstreckt sich wenigstens eine Medienleitung für ein Behandlungsmedium, z. B. Wasser, Druckluft oder ein Wasser/Luft-Gemisch (Spray). Die Medienleitung 11 erstreckt sich axial oder Z-förmig durch eine radiale (nicht dargestellt) oder hohlzylindrische Teilungsfuge zwischen der Kupplungsausnehmung 7 und dem Kupplungszapfen 8, wobei die Medienleitung 11 die Teilungsfuge im Bereich einer Ringnut im Kupplungszapfen 8 oder in der Kupplungsausnehmung 7 durchsetzt, so daß in jeder Drehstellung der Mediendurchgang gewährleistet ist. Beiderseits vom Durchgang ist die Teilungsfuge durch einen Dichtring abgedichtet, der in einer Ringnut in der Wandung der Kupplungsausnehmung 7 oder in der Mantelfläche des Kupplungszapfens 8 angeordnet sein kann. Hierdurch ist eine freie Drehbarkeit um 360° und mehr gewährleistet. Die Medienleitung 11 erstreckt sich vom hinteren Ende des Behandlungsinstruments 1 zu dessen vorderem Endbereich, wobei sie teilweise als Kanal im Instrumentenkörper oder als Schlauch- bzw. Rohrleitung verlaufen kann. Die Medienleitung 11 mündet im vorderen Endbereich des Behandlungsinstruments 1 aus diesem aus, wobei diese Mündungsöffnung 13 auf die Behandlungsstelle bzw. auf die Spitze des Werkzeugs 6 gerichtet ist.

Für den Antrieb des vorzugsweise drehbaren Werkzeugs 6 ist in der Antriebseinheit 2 ein Elektromotor 14, insbesondere ein Kollektormotor, in einer vorzugsweise von hinten zugänglichen Motorkammer 15 positioniert, der durch eine Antriebswelle antriebsmäßig mit dem Werkzeughalter 5 verbunden ist. Die Antriebswelle 16 erstreckt sich mit radialem Bewegungsspiel in einem Wellenkanal 17, der sich von der Motorkammer 15 zunächst durch den dazugehörigen Endbereich der Antriebseinheit 2 erstreckt, die Kupplung 4 axial durchsetzt und sich im Handstück 3 bis zum Werkzeughalter 5 fortsetzt. Im Bereich der Kupplung 4 weist auch die Antriebswelle 16 eine Steckkupplung 18 mit formschlüssig axial ineinander greifenden Steckkupplungsteilen 18a, 18b auf. Es kann ein von einem ersten Antriebswellenabschnitt 16a vorragender und im Querschnitt unrunder Steckkupplungszapfen 18a vorgesehen sein, der in eine Steckkupplungsausnehmung 18 b einfasst, die nach hinten offen in einem zweiten weiter nach vorne erstreckenden Antriebswellenabschnitt 16b angeordnet ist. Beim Ausführungsbeispiel befindet sich die Steckkupplung 18 im Bereich des Kupplungszapfens 8, in dessen vorderen Bereich der Wellenkanal 17 einen bezüglich einem hinteren Wellenkanalabschnitt 17a im Querschnitt etwas vergrößerten Wellenkanalabschnitt 17b aufweist. Die Innenwand bzw. Innenmantelfläche ist mit 17c und der sich zwischen dieser und der Antriebswelle 16 befindliche Ringspalt ist mit 17d bezeichnet. Im Bereich vor dem Kupplungszapfen 8 ist der Wellenkanal 17 durch die Kupplungsausnehmung 7 gebildet, wobei der Wellenkanal 17 noch weiter vorne nicht dargestellt ist.

Der Kupplungszapfen 8 sitzt mit einem Flansch 8a in einer Außenhülse 2a der Antriebseinheit 2, und er ist darin in nicht dargestellter Weise lösbar arretiert. Hinter dem Flansch 8a befindet sich in der Außenhülse 2a eine Buchse 2b, in der sich die Motorkammer 15 befindet, in der der Motor 14 von hinten eingesetzt ist. Der sich vom Motor 14 nach vorne erstreckende Antriebswellenabschnitt 16a ist durch ein Wälzlager 19 in der Antriebseinheit 2 drehbar gelagert, dessen Außenring in einer Lagerausnehmung 21 sitzt, die z.B. nach vorne offen ist, so dass das Wälzlager 19 von vorne in die Lagerausnehmung 21 einsetzbar ist. Vorhandene Positionierungselemente für die Buchse 2b in der Außenhülse 2a sind vorhanden, jedoch aus Vereinfachungsgründen ebenfalls nicht dargestellt.

Fig. 1. zeigt das Behandlungsinstrument 1 in einer Bereitschaftsposition, in der es sich nach oben erstreckt, z.B. schräg, und in einer Ablagevorrichtung 22 eines Instrumentenhalters 23 abgelegt ist, der Teil eines im weiteren nicht dargestellten Behandlungsstuhls zur Behandlung eines menschlichen oder tierischen Körpers ist. Die Ablagevorrichtung 22 ist z.B. durch eine stufenförmig verjüngte Steckausnehmung 22a gebildet, in die das Behandlungsinstrument 1 durch einen verjüngten Schlitz 22b von einer Seite her, z.B. von unten, einführbar ist. In dieser Bereitschaftsstellung ist das Behandlungsinstrument 1 in an sich bekannter Weise für den Zahnarzt ökonomisch griffgünstig angeordnet.

In der Wartungsphase wird das Handstück 3 von der Antriebseinheit 2 abgenommen, und es wird ein strömungsfähiges Pflegemittel durch die Kupplungsausnehmung 7 mit einem Treibmittel, z.B. Druckluft, eingeführt. Das flüssige- oder sprayförmige und somit strömungsfähige Pflegemittel benetzt alle Oberflächen in der Kupplungsausnehmung 7 und im sich davon erstreckenden Wellenkanal 17, wobei auch die Oberflächen des zweiten Antriebswellenabschnitts 16b benetzt werden.

Insbesondere bei der stehenden Ablage des Behandlungsinstruments 1 über einen längeren Zeitraum, z.B. über Nacht oder über ein Wochenende, in der Ablagevorrichtung 22 wandert das Pflegemittel an der Innenwand 17c des Wellenkanals 17 zurück bis in das Motorgehäuse. Dabei vermischt sich der im Funktionsbetrieb abgeschliffene Kohlenstaub der Kollektoren mit dem Pflegemittel, was zur Verschmutzung, Leistungsminderung und zum Ausfall des Motors 14 z.B. durch Kurzschluss führen kann.

Um die Rückströmung des ölhaltigen Pflegemittels zu vermeiden oder zumindest zu vermindern, ist an der Innenmantelfläche 17c des Wellenkanals 17 wenigstens eine Rückströmsperre 25 angeordnet. Die Rückströmsperre 25 weist einen Speicherraum 30 auf, der das zurückströmende Pflegemittel wenigstens teilsweise aufzunehmen vermag. Bei einer anderen, insbesondere nach unten geneigten Anordnung des Behandlungsinstruments 1, z.B. in der Behandlungsphase, kann das Pflegemittel wieder nach vorne strömen, wodurch der Speicherraum 30 entleert wird.

Obwohl die Rückströmsperre 25 nur im unteren Bereich des Wellenkanals 17 angeordnet zu sein braucht, um das sich dort auf Grund der Schwerkraft sammelnde Pflegemittel zu speichern, ist es vorteilhaft, die Rückströmsperre 25 ringförmig auszubilden, so dass ihre Wirksamkeit von der Position des Behandlungsinstruments 1 unabhängig ist.

Der Speicherraum 30 der Rückströmsperre 25 kann durch eine Ausnehmung 26 gebildet sein, oder er kann aus speicher- oder saugfähigem Material bestehen, so dass das zurückkriechende Pflegemittel gestoppt wird. Als Speichermedium sind folgende Materialen denkbar: Filz oder Fließ, z.B. Nadelfilz oder Faserfließ aus metallischen, mineralischen oder textilen Fasern bzw. Faserverbundwirkstoffen, Sintermetall, metallische Gitterstruktur wie Drahtgitter oder Drahtgewebe oder Drahtgeflecht, z.B. aus Stahlwolle.

Die Rückströmsperre 25 ist an bzw. in der Innenwand 17c des Wellenkanals 17 angeordnet, wobei zwischen der Rückströmsperre 25 und der Antriebswelle 16 ein vorzugsweise ringförmiger Spalt 17d vorhanden ist und deshalb die Rückströmsperre 25 die Antriebswelle 16 nicht berührt.

Es ist vorteilhaft, die Rückströmsperre 25 mit einer Luftzuführungsvorrichtung so zu kombinieren, dass der Speicherraum 30 durch die zugeführte und sich weiter nach vorne erstreckende Luftströmung freigeblasen werden kann. Hierbei reicht es aus, wenn die Luftströmung am Speicherraum vorbei geführt wird, so dass sie diesen tangiert. Es ist auch vorteilhaft, die Luftströmung durch den Speicherraum 30 hindurch zu führen, wodurch dessen Freiblasung weiter verbessert wird.

Beim Ausführungsbeispiel ist die Rückströmsperre 25 im Bereich des sich in der Antriebseinheit 2 erstreckenden Wellenkanalabschnitts 17a angeordnet, insbesondere vorderseitig vom Wälzlager 19. Dabei kann zwischen der vorzugsweise ringförmigen Rückströmsperre 25 und dem Wälzlager 19 ein Abstand angeordnet sein, in dem beim Ausführungsbeispiel ein Distanz- oder Dichtring 27 angeordnet ist.

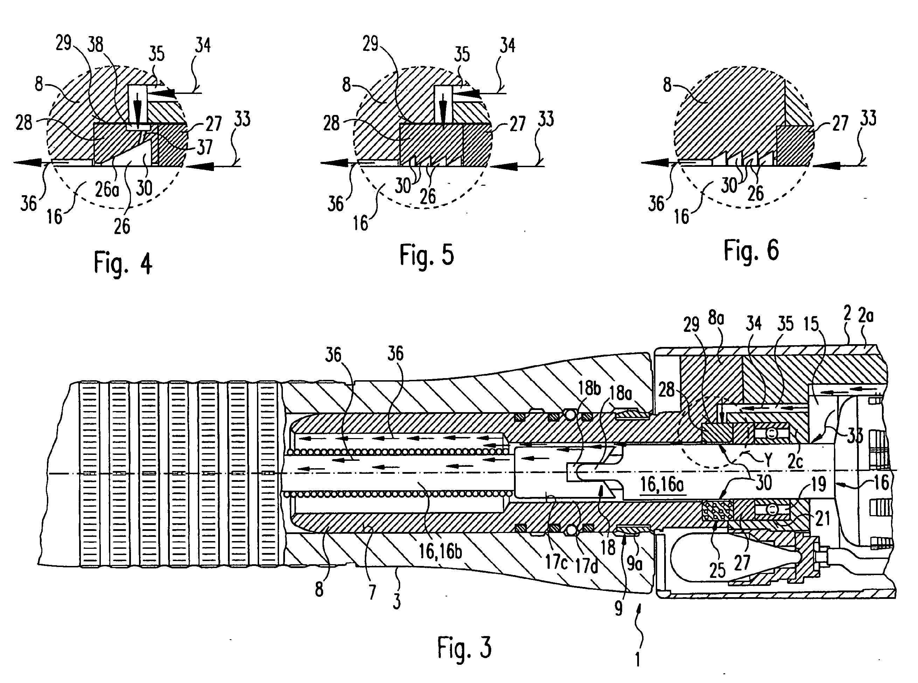

Der Speicherraum kann in die Innenwand 17c eingearbeitet sein, wie es die noch zu beschreibende Fig. 6 zeigt. Es ist herstellungstechnisch vorteilhafter, die Rückströmsperre 25 bzw. den Speicherraum 30 an einem Ring 28 auszubilden, der in eine Ringausnehmung 29 in der Innenwand 17c eingesetzt ist. Beim Ausführungsbeispiel ist die Ringausnehmung 29 nach hinten offen im Kupplungszapfen 8 bzw. dem Flansch 8a angeordnet. Es lässt sich deshalb der Ring 28 von hinten in den Kupplungszapfen 8 einsetzen, vorzugsweise vor dessen Montage in der Außenhülse 2a. Dabei kann der Distanz- oder Dichtring 27 den Ring 28 z.B. durch direkte Anlage, positionieren, wobei der Distanz- oder Dichtring 27 rückseitig am Wälzlager 19, z.B. an dessen Außenring, anliegen kann und dadurch positioniert sein kann. Das Wälzlager 19 bzw. dessen Außenring kann durch eine nach vorne weisende Schulterfläche in der Stirnwand 2c der Buchse 2d so positioniert sein, dass das Wälzlager 19 in der Stirnwand 2c von vorne montierbar ist.

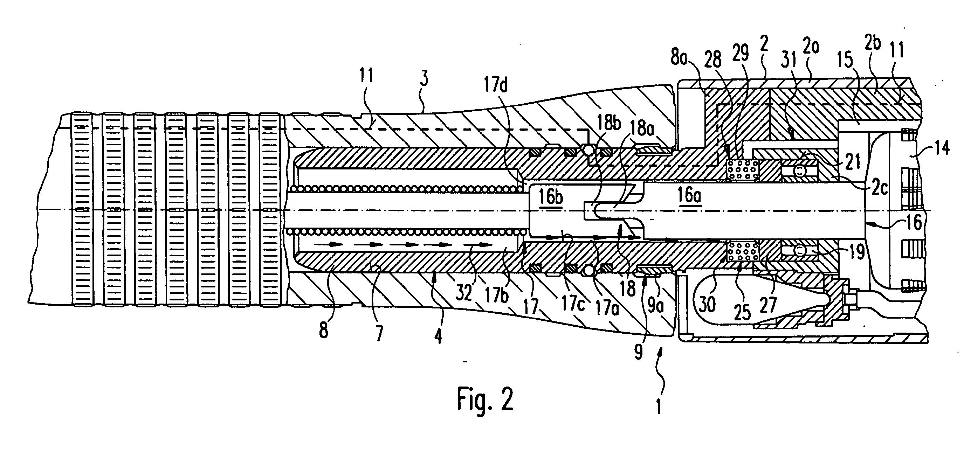

Fig. 2 zeigt mit nach hinten weisenden Pfeilen 32 zurückwanderndes Pflegemittel insbesondere im unteren Bereich des Spaltes17d an der Innenwand 17c. Das zum Speicherraum 30 in der Rückströmsperre 25 gelangende Pflegemittel wird im Speicherraum 30 aufgenommen. Es kann somit nicht weiter zurückkriechen und in den Bereich des Motorgehäuses gelangen. Das gespeicherte Pflegemittel kann in einer mit seinem vorderen Ende nach unten geneigten Stellung aus dem Speicherraum 30 wieder nach vorne wandern. Dieser Entleerungsvorgang kann durch einen im Spalt von hinten nach vorne strömenden Luftstrom 33 forciert werden, der sich durch die Fuge zwischen dem Antriebswellenabschnitt 16a und der Stirnwand 2c und dem Innenring des Wälzlagers 19 oder durch das Wälzlager 19 und dem gegebenenfalls vorhandenen Distanz- oder Dichtring 27 erstreckt. Bereits ein geringer Luftstrom ist in der Lage, den Spalt zwischen dem Antriebswellenabschnitt 16a und dem den Speicherraum 30 aufweisenden Einbauring 28 frei zu halten und dadurch die Entleerung des Speicherraums zu forcieren. Hierbei wird der Luftstrom 33 am Speicherraum 30 vorbei geführt, wobei er diesen sozusagen berührt.

Der Luftstrom ist noch wirksamer, wenn er den Speicherraum 30 durchströmt, insbesondere von hinten nach vorne oder etwa radial einwärts. Ein solcher Luftstrom 34 kann durch einen oder mehrere auf dem Umfang verteilt angeordnete Luftkanäle 35 erzeugt werden, die radial nach innen in den Speicherraum 30 münden. Es ist vorteilhaft, einen Kühlluftstrom für den Motor 14 als Luftstrom 33 und/oder 34 zu benutzen. Beim Ausführungsbeispiel erstrecken sich die Luftkanäle 35 z.B. axial durch die Stirnwand 2c und z.B. winkelförmig im Flansch 8a, so dass die Kühlluft durch den Spalt 17d und/oder durch den wenigstens einen Luftkanal 35 strömen und die Luftströme 33 und/oder 34 bilden kann. Der gegebenenfalls gemeinsame mit 36 bezeichnete Luftstrom strömt aus dem Speicherraum 30 axial nach vorne, wobei er das Pflegemittel mitnimmt und gegebenenfalls ein Gemisch aus Flüssigkeit und Luft bilden kann.

Beim Ausführungsbeispiel nach Fig. 3 ist ein Ring 28 mit einem Speicherraum 30 vorgesehen, der durch aufnahmefähiges Material gebildet ist. Dies ist in der oberen Bildhälfte nicht dargestellt und in der unteren Bildhälfte durch kleine Kreise im Sinne der vorbeschriebenen aufnahmefähigen Materialien verdeutlicht. Das Material und somit der Speicherraum 30 werden im Funktionsbetrieb des Behandlungsinstruments 1 vom Luftstrom 34 durchströmt, wobei das Pflegemittel zunächst radial nach innen und dann nach vorne gefördert wird und der Speicherraum 30 entleert wird.

Beim Ausführungsbeispiel nach Fig. 4, bei dem gleiche oder vergleichbare Teile mit gleichen Bezugszeichen versehen sind, weist der Einbauring 28 anstelle eines aufnahmefähigen Materials eine Ausnehmung 26 vorzugsweise in Ringform auf, die durch eine oder mehrere auf dem Umfang verteilt angeordnete etwa radiale Kanäle 37 mit dem wenigstens einen Luftkanal 35 verbunden sind. Der Ring 28 kann vorzugsweise an seiner Mantelfläche eine sich wenigstens über einen Teilbereich seines Umfangs oder über seinen gesamten Umfang erstreckende Nut 38 aufweisen, durch die die Luft auf mehrere auf den Umfang verteilt angeordnete Kanäle 37 verteilt werden kann. Dieser Ring 28 kann aus für Luft undurchlässigem Material bestehen, z.B. Kunststoff oder Metall.

Die Querschnittsform der Ausnehmung 26 ist vorzugsweise sägezahnförmig, das heißt, ihre vordere Seitenfläche erstreckt sich nach vorne konvergent, z.B. schräg oder gerundet. Hierdurch wird die Förderung des Pflegemittels axial nach vorne begünstigt.

Das Ausführungsbeispiel nach Fig. 5 unterscheidet sich vom Ausführungsbeispiel nach Fig. 3 durch mehrere axial nebeneinander angeordnete und vorzugsweise ringförmige Ausnehmungen 26, z.B. vier Stück, in vorzugsweise ebenfalls sägezahnförmiger und kleinerer Querschnittsform.

Es können auch beim Ausführungsbeispiel nach Fig. 4 mehrere, axial nebeneinander angeordnete Ausnehmungen 26 vorgesehen sein.

Beim Ausführungsbeispiel nach Fig. 6 ist eine oder sind mehrere axial nebeneinander angeordnete Ausnehmungen 26 vorgesehen, die vorzugsweise die sägezahnförmige Querschnittsform aufweisen und an denen der Luftstrom 33 zwecks Mitnahme des Pflegemittels vorbei strömt, so dass die wenigstens eine Ausnehmung 26 in Funktionsverbindung mit dem Luftstrom 33 steht. Bei dieser Ausgestaltung kann die wenigstens eine Ausnehmung 26 in einem Ring 28 (nicht dargestellt) oder direkt in der Innenwand 17c des Wellenkanals 17 ausgebildet sein, wie es Fig. 6 zeigt.

Es ist vorteilhaft, die radiale Breite des Spaltes 17d zwischen der Antriebswelle 16 und der Rückströmsperre 25 bzw. dem Einbauring 28 kleiner zu bemessen als zwischen der Antriebswelle 16 und der Innenwand 17c des übrigen Wellenkanals 17. Hierdurch wird eine Stufe im Wellenkanal 17 gebildet, die den Rückström weiter erschwert.

## Patentansprüche

1. Medizinisches oder dentalmedizinisches Behandlungsinstrument (1) mit einem Handstück (3) und einer Antriebseinheit (2), die durch eine Kupplung (4) lösbar miteinander kuppelbar sind,
wobei in der Antriebseinheit (2) ein Motor (14) in einer Kammer (15) angeordnet ist, von der sich ein Wellenkanal (17) nach vorne erstreckt, der die Kupplung (4) durchsetzt und sich im Handstück (3) fortsetzt,
und wobei sich durch den Wellenkanal (17) eine Antriebswelle (16) vom Motor (14) nach vorne erstreckt, die antriebsmäßig mit einem im vorderen Endbereich des Handstücks (3) angeordneten Werkzeughalter (5) verbunden ist,
**dadurch gekennzeichnet,**
**das** an der Innenwand (17c) des Wellenkanals (17) wenigstens eine Rückströmsperre (25) mit einem Speicherraum (30) für eine Flüssigkeit angeordnet ist.

2. Behandlungsinstrument nach Anspruch 1,
**dadurch gekennzeichnet,**
**das** der Speicherraum (30) den Wellenkanal (17) ringförmig umgibt.

3. Behandlungsinstrument nach Anspruch 1 oder 2,
**dadurch gekennzeichnet,**
**dass** der Speicherraum (30) durch poröses oder saugfähiges Material gebildet ist.

4. Behandlungsinstrument nach Anspruch 1 oder 2,
**dadurch gekennzeichnet,**
**dass** die Rückströmsperre (25) die Antriebswelle (16) ringförmig mit Abstand umgibt.

5. Behandlungsinstrument nach Anspruch 4,
**dadurch gekennzeichnet,**
**dass** der Abstand zwischen der Antriebswelle (8) und der Rückströmsperre (11) kleiner als der Abstand zwischen der Antriebswelle (8) und der übrigen Innenwand (17c) des Wellenkanals (17) ist.

6. Behandlungsinstrument nach einem der vorherigen Ansprüche,
**dadurch gekennzeichnet,**
**dass** die Rückströmsperre (25) in dem Bereich des Wellenkanals (17) angeordnet ist, der sich in der Antriebseinheit (2) erstreckt, insbesondere im Bereich eines sich von der Antriebseinheit (2) nach vorne erstreckenden Kupplungszapfens (8), vorzugsweise im hinteren Bereich des Kupplungszapfens (8).

7. Behandlungsinstrument nach einem der vorherigen Ansprüche,
**dadurch gekennzeichnet,**
**dass** der Speicherraum (30) in einem Einbauring (28) angeordnet ist.

8. Behandlungsinstrument nach Anspruch 7,
**dadurch gekennzeichnet,**
**dass** der Einbauring (28) von hinten in das aufnehmende Bauteil montierbar ist, insbesondere in den Kupplungszapfen (8).

9. Behandlungsinstrument nach einem der vorherigen Ansprüche,
**dadurch gekennzeichnet,**
**dass** der Speicherraum (30) durch eine Ausnehmung (26) gebildet ist.

10. Behandlungsinstrument nach Anspruch 9,
**dadurch gekennzeichnet,**
**dass** die vordere Seitenfläche (26a) der Ausnehmung (26) nach vorne konvergent verläuft.

11. Behandlungsinstrument nach einem der vorherigen Ansprüche,
**dadurch gekennzeichnet,**
**dass** einen Luftstrom (33 und/oder 34) erzeugende Luftzuführungsmittel (31) für die Rückströmsperre (25) vorgesehen sind, welche ein Entleeren des Speicherraums (30) von gespeicherter Flüssigkeit unterstützen kann wobei vorzugsweise der Luftstrom den Speicherraum (30) durchströmt oder an diesem vorbei strömt.

12. Behandlungsinstrument nach Anspruch 11,
bei dem der Motor (14) mit Luft gekühlt ist,
**dadurch gekennzeichnet,**
**dass** die Kühlluft zum Unterstützen des Entleerens oder Freiblasens des Speicherraums (30) verwendet wird.

13. Behandlungsinstrument nach Anspruch 12,
**dadurch gekennzeichnet,**
**dass** ein oder mehrere zum Speicherraum (30) führende Luftzuführungskanäle (35) vorgesehen sind, die in Umfangsrichtung versetzt angeordnet sind.

14. Behandlungsinstrument nach Anspruch 13,
**dadurch gekennzeichnet,**
**dass** die Luftzuführungskanäle (35) quer zur Antriebswelle (16) oder nach vorne auf den Speicherraum (30) gerichtet sind.

15. Behandlungsinstrument nach einem der vorherigen Ansprüche,
**dadurch gekennzeichnet,**
**dass** der Speicherraum (30) durch Sintermetall, Stahlwolle, Drahtgitter, Nadelfilz, metallischen Gitterstrukturen, Faservlies aus metallischen, mineralischen und textilen Faser oder Faserverbundwerkstoffen gebildet ist.

## Claims

1. Medical or dental-medical treatment instrument (1) having a handpiece (3) and a drive unit (2) which can be releasably coupled with one another by means of a coupling (4),
there being arranged in the drive unit (2) a motor (14) in a chamber (15) from which a shaft channel (17) extends forwardly, which passes through the coupling (4) and continues in the handpiece (3),
there extending forwardly from the motor (14) through the shaft channel (17) a drive shaft (16) which is drivingly connected with a tool holder (5) arranged in the forward end region of the handpiece (3),
**characterized in that**,
there is arranged on the inner wall (17c) of the shaft channel (17) at least one backflow block (25) having a reservoir (30) for a liquid.

2. Treatment instrument according to claim 1,
**characterized in that**,
the reservoir (30) surrounds the shaft channel (17) in a ring shape.

3. Treatment instrument according to claim 1 or 2,
**characterized in that**,
the reservoir (30) is formed of a porous or absorbent material.

4. Treatment instrument according to claim 1 or 2,
**characterized in that**,
the backflow block (25) surrounds the drive shaft (16) in a ring shape with a spacing.

5. Treatment instrument according to claim 4,
**characterized in that**,
the spacing between the drive shaft (8) and the backflow block (25) is smaller than the spacing between the drive shaft (8) and the remaining inner wall (17c) of the shaft channel (17).

6. Treatment instrument according to any preceding claim,
**characterized in that**,
the backflow block (25) is arranged in the region of the shaft channel (17) which extends in the drive unit (2), in particular in the region of a coupling pin (8) extending forwardly from the drive unit (2), preferably in the rearward region of the coupling pin (8).

7. Treatment instrument according to any preceding claim,
**characterized in that**,
the reservoir (30) is arranged in an insert ring (28).

8. Treatment instrument according to claim 7,
**characterized in that**,
the insert ring (28) can be installed from the rear into the receiving component, in particular into the coupling pin (8).

9. Treatment instrument according to any preceding claim,
**characterized in that**,
the reservoir (30) is formed by a recess (26).

10. Treatment instrument according to claim 9,
**characterized in that**,
the forward side surface (26a) of the recess (26) develops forwardly convergently.

11. Treatment instrument according to any preceding claim,
**characterized in that**,
there are provided air supply means (31) generating an air flow (33 and/or 34) for the backflow block (25), which can promote the emptying of the reservoir (30) of stored liquid, whereby preferably the air flow flows through the reservoir (30) or flows past the reservoir.

12. Treatment instrument according to claim 11,
in which the motor (14) is cooled with air,
**characterized in that**,
the cooling air is employed to promote the emptying or blowing free of the reservoir (30).

13. Treatment instrument according to claim 12,
**characterized in that**,
there are provided one or more air supply channels (35) leading to the reservoir (30), which channels are arranged offset in the circumferential direction.

14. Treatment instrument according to claim 13,
**characterized in that**,
the air supply channels (35) are directed transversely of the drive shaft (16) or forwardly towards the reservoir (30).

15. Treatment instrument according to any preceding claim,
**characterized in that**,
the reservoir (30) is formed by means of sintered metal, steel wool, metal grid, needled felt, metallic grid structures, fibre fleece of metallic or mineral or textile fibres or fibre composites.

## Revendications

1. Instrument de traitement (1) médical ou médico-dentaire, comportant une pièce à main (3) et une unité d'entraînement (2) qui sont aptes à être couplées de manière amovible l'une à l'autre par l'intermédiaire d'un raccord (4),
un moteur (14) étant monté dans l'unité d'entraînement (2) dans une chambre (15), à partir de laquelle part un conduit d'arbre (17), qui s'étend vers l'avant et qui passe à travers le raccord (4) et se prolonge dans la pièce à main (3),
et un arbre d'entraînement (16) s'étendant dans le conduit d'arbre (17) à partir du moteur (14) vers l'avant et étant relié en entraînement avec un porte-outil (5) monté dans la zone d'extrémité antérieure de la pièce à main (3),
**caractérisé en ce qu'**au moins un clapet anti-retour (25) avec un volume de retenue (30) pour un liquide est agencé contre la paroi intérieure (17c) du conduit d'arbre (17).

2. Instrument de traitement selon la revendication 1, **caractérisé en ce que** le volume de retenue (30) entoure de manière annulaire le conduit d'arbre (17).

3. Instrument de traitement selon la revendication 1 ou 2, **caractérisé en ce que** le volume de retenue (30) est formé par un matériau poreux ou absorbant.

4. Instrument de traitement selon la revendication 1 ou 2, **caractérisé en ce que** le clapet anti-retour (25) entoure de manière annulaire l'arbre d'entraînement (16) à distance de celui-ci.

5. Instrument de traitement selon la revendication 4, **caractérisé en ce que** la distance entre l'arbre d'entraînement (8) et le clapet anti-retour (11) est plus petite que la distance entre l'arbre d'entraînement (8) et le reste de la paroi intérieure (17c) du conduit d'arbre (17).

6. Instrument de traitement selon l'une quelconque des revendications précédentes, **caractérisé en ce que** le clapet anti-retour (25) est monté dans la zone du conduit d'arbre (17) qui s'étend dans l'unité d'entraînement (2), en particulier dans la zone d'un tenon d'accouplement (8) qui s'étend vers l'avant à partir de l'unité d'entraînement (2), de préférence dans la zone postérieure du tenon d'accouplement (8).

7. Instrument de traitement selon l'une quelconque des revendications précédentes, **caractérisé en ce que** le volume de retenue (30) est agencé dans une bague insérée (28).

8. Instrument de traitement selon la revendication 7, **caractérisé en ce que** la bague insérée (28) peut être montée de derrière dans la pièce la recevant, en particulier dans le tenon d'accouplement (8).

9. Instrument de traitement selon l'une quelconque des revendications précédentes, **caractérisé en ce que** le volume de retenue (30) est formé par un évidement (26).

10. Instrument de traitement selon la revendication 9, **caractérisé en ce que** les faces latérales avant (26a) de l'évidement (26) convergent vers l'avant.

11. Instrument de traitement selon l'une quelconque des revendications précédentes, **caractérisé en ce que** des moyens d'admission d'air (31), générant un flux d'air (33 et/ou 34), sont prévus pour le clapet anti-retour (25), lesquels contribuent à vidanger le liquide contenu dans le volume de retenue (30), sachant que, de préférence, le flux d'air traverse le volume de retenue (30) ou afflue le long de celui-ci.

12. Instrument de traitement selon la revendication 11, dans lequel le moteur (14) est refroidi à l'air, **caractérisé en ce que** l'air de refroidissement est utilisé pour aider à vidanger ou vider par soufflage le volume de retenue (30).

13. Instrument de traitement selon la revendication 12, **caractérisé en ce qu'**il est prévu un ou plusieurs canaux d'admission d'air (35), qui mènent vers le volume de retenue (30) et qui sont agencés en étant décalés dans le sens périphérique.

14. Instrument de traitement selon la revendication 13, **caractérisé en ce que** les canaux d'admission d'air (35) sont orientés perpendiculairement à l'arbre d'entraînement (16) ou vers l'avant vers le volume de retenue (30).

15. Instrument de traitement selon l'une quelconque des revendications précédentes, **caractérisé en ce que** le volume de retenue (30) est formé par un métal fritté, une laine d'acier, un treillis en fil, du feutre aiguilleté, des structures en treillis métalliques, un mat de fibres métalliques, minérales et textiles ou des matériaux composites renforcés par fibres.
